(19) Europäisches Patentamt
European Patent Office
Office européen des brevets

(11)  **EP 4 571 449 B1**

(12)  **EUROPEAN PATENT SPECIFICATION**

(45) Date of publication and mention
of the grant of the patent:
**01.07.2026  Bulletin 2026/27**

(21) Application number: **24216869.8**

(22) Date of filing: **02.12.2024**

(51) International Patent Classification (IPC):
*G05D 11/13* (2006.01)     *A23G 9/04* (2006.01)
*A23G 9/14* (2006.01)      *A23G 9/16* (2006.01)
*A23G 9/22* (2006.01)

(52) Cooperative Patent Classification (CPC):
**G05D 11/131; A23G 9/04; A23G 9/14; A23G 9/166;
A23G 9/228**

(54)  **A METHOD OF PRODUCING ICE CREAM WITH SOLID INGREDIENTS**

VERFAHREN ZUR HERSTELLUNG VON SPEISEEIS MIT FESTEN BESTANDTEILEN

MÉTHODE DE PRODUCTION DE CRÈME GLACÉE AVEC DES INGRÉDIENTS SOLIDES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **12.12.2023  EP 23215857**

(43) Date of publication of application:
**18.06.2025  Bulletin 2025/25**

(73) Proprietor: **Tetra Laval Holdings & Finance S.A.
1009 Pully (CH)**

(72) Inventor: **Sandholdt Kirkelund, Johs
8270 Højbjerg (DK)**

(74) Representative: **Tetra Pak Patent Attorneys
AB Tetra Pak
Patent Department
Ruben Rausings gata
221 86 Lund (SE)**

(56) References cited:
**US-A1- 2010 206 220     US-A1- 2016 068 347
US-A1- 2020 187 523**

**Description**

Technical Field

The present disclosure generally relates to production of frozen ice cream, and in particular to a technique of adding solid ingredients to a flow of ice cream during production.

Background Art

Frozen ice cream that contains solid ingredients is a popular product. The solid ingredients may, for example, include pieces of fruit, chocolate, or nuts.

Ideally, the consumer should find a solid ingredient in every bite or at least several per scoop. It is thus desirable to ensure a uniform distribution of the solid ingredients throughout the ice cream.

In the production of ice cream with solid ingredients by a known apparatus, a continuous flow of mix is cooled in a through-flow freezer to -4°C to -6°C at the outlet of a through-flow freezer. The mix typically has a swelling degree of around 100%, i. e. that before the inlet to the through-flow freezer, air is mixed in a volume that corresponds to the volume of the liquid mix, and this air is distributed evenly in the mix as small air bubbles. The solid ingredients are mixed into the flow of ice cream by a mixing arrangement after the outlet of the through-flow freezer, for example a lamella pump, which provides a uniform relationship between the ice cream and the solid ingredients. Thereafter, the flow of ice cream may pass a further mixing arrangement which is configured to further mix the solid ingredients with the ice cream. The ice cream is thereafter formed into final products which are packed in a packing station and pass a freezing apparatus which quickly cools them to a storage temperature of typically -12°C to -18°C, so that a stability of the product is achieved, and the products are then stored for further distribution.

The feeding of the solid ingredients to the mixing arrangement is performed by a conveyor system. One key factor for achieving a uniform distribution of the solid ingredients in the ice cream is to operate the conveyor system to feed the solid ingredients at a uniform and well-controlled rate to the mixing arrangement. If the mixing arrangement receives the solid ingredients at an uneven rate, the solid ingredients are likely to be non-uniformly distributed in the ice cream despite the use of a second mixing arrangement. It can be quite challenging to operate the conveyor system to provide an even and well-controlled feed rate. The conveyor system may need to handle solid ingredients of different properties, in term of size, density, softness, etc. The conveyor system may be required to achieve a wide range of feed rates of the solid ingredients to the mixing arrangement. The solid ingredients may exhibit different levels of adhesion to each other and to the conveyor system. Further, the conveyor system may be subjected to mechanical impact during operation, causing significant deviations in the feed rate of the solid ingredients. Further, the conveyor system may need to be mechanically adjusted to handle different solid ingredients. The mechanical adjustment makes it even more difficult to operate of the conveyor system to achieve a consistent feed rate of solid ingredients.

Related prior art is described in patent documents US 2016/068347 A1, US 2020/187523 A1 and US 2010/206220 A1. US 2016/068347 A1 discloses, according to its Abstract, an apparatus comprising a hopper and an auger conveyor for conveying solid items, wherein the auger conveyor comprises an auger and an outlet pipe enclosing the auger along at least a part of the length of the auger, the outlet pipe having an inlet end and an outlet end, wherein the outlet pipe is mounted at its inlet end to the hopper for receiving solid items from the hopper through an outlet opening near the bottom of the hopper, and the auger extends partly along at least a part of the bottom of the hopper, partly inside the outlet pipe along substantially the full length thereof, and wherein at least a part of the inner surface of the hopper above the outlet opening is inclined towards the direction of conveyance of the auger conveyor.

Summary

It is an objective to at least partly overcome one or more limitations of the prior art.

One such objective is to provide a technique of producing ice cream with a uniform distribution of solid ingredients.

Another objective is to provide such a technique that is robust.

Yet another objective is to provide such a technique that is simple to adapt to different conveyor systems and to solid ingredients of different properties.

One or more of these objectives, as well as further objectives that may appear from the description below, are at least partly achieved by a method of producing ice cream that contains one or more solid ingredients according to the independent claim, embodiments thereof being defined by the dependent claims.

A first aspect of the present disclosure is a method of producing ice cream that contains one or more solid ingredients. The method comprises: generating a flow of ice cream through a mixer, which is configured to mix the one or more solid ingredients into the ice cream; and operating a conveyor device in a feeding system to provide the one or more solid ingredients to the mixer at a target dosing rate given by a target dosing signal. Said operating the conveyor device comprises: obtaining a weight signal representative of a weight of the one or more solid ingredients in the feeding system; obtaining a speed signal representative of a speed of the conveyor device; and determining, based on the weight signal and the speed signal, a feedback signal that represents an estimated dosing rate of the one or more solid ingredients by the conveyor device. Said determining comprises supplying input data obtained from the weight signal and the speed signal to a state observer, which generates the feedback signal based on a system model that relates a momentary dosing rate of the one or more solid ingredients to a momentary speed of the conveyor device. The method further comprises: operating a control system on the target dosing signal and the feedback signal to generate a control signal for setting the speed of the conveyor device. The method further comprises determining the momentary dosing rate of the one or more solid ingredients based on the weight signal, and determining the momentary speed of the conveyor device based on the speed signal, wherein the momentary dosing rate and the momentary speed are included in the input data that is supplied to the state observer. Also, the state observer repeatedly performs, at a respective current time step, a prediction to predict a state vector and the estimated dosing rate at a next time step based on the momentary speed of the conveyor device, and an updating to adjust the state vector and the estimated dosing rate based on the momentary dosing rate.

By generating the feedback signal for the control system by use of a state observer, which is supplied with input data from the weight signal and the speed signal and which operates in accordance with a system model that relates the momentary dosing rate of the one or more solid ingredients to the momentary speed of the conveyor device, a stable and robust operation of the conveyor device is achieved. One reason for this is that state observers with a properly configured system model are inherently operating to determine a statistically optimal solution at any given time. The stable and robust operation of the conveyor device will in turn facilitate attainment of an ice cream with an accurate amount of solid ingredients, which are uniformly distributed within the ice cream. The state operator is also inherently resistant to measurement noise, which is prevalent in an industrial facility. A high level of measurement noise may be inherent to the dosing of the solid ingredients. For example, the solid ingredients may produce vibrations as they move into the conveyor device, for example via a hopper. Further, the conveyor device as such, for example a screw conveyor, may also produce vibrations during its operation. All of these vibrations may show up as measurement noise in the weight signal. Further, as will be demonstrated herein, the feedback signal generated by the state observer will respond quickly and accurately to changes in the weight signal. Such a fast response facilitates the task of designing the control system for accurate control of the conveyor device.

In the following, various embodiments of the first aspect are defined. These embodiments provide at least some of the technical effects and advantages described in the foregoing, as well as additional technical effects and advantages as readily understood by the skilled person, for example in view of the following detailed description.

In some embodiments, the momentary dosing rate, in the system model, is a linear function of the momentary speed of the conveyor device.

In some embodiments, at least one coefficient of the system model of the state observer is updated based on the feedback signal and the speed signal.

In some embodiments, the method further comprises: operating the state observer to suspend the updating upon receipt of an alert signal that indicates a start of a refill operation of adding a batch of the one or more solid ingredients to the feeding system.

In some embodiments, the method further comprises: replacing, upon receipt of the alert signal, the state vector of the state observer for a reference state vector.

In some embodiments, the reference state vector is a previous state vector that was used by the state observer at an earlier time step, wherein the earlier time step precedes the start of the refill operation by a predefined number of data samples, wherein each data sample corresponds an instance of said input data being obtained from the weight signal and the speed signal and supplied to the state observer.

In some embodiments, the method further comprises: maintaining a set of most recently used state vectors in a memory, and obtaining the reference state vector from the set of most recently used state vectors in the memory.

In some embodiments, the method further comprises: processing at least one of the weight signal or the feedback signal for detection of the start of the refill operation, and generating the alert signal upon said detection.

In some embodiments, the start of the refill operation is detected when an increase in the weight of the one or more solid ingredients in the feeding system per unit time, given by the weight signal, exceeds a weight increase threshold.

In some embodiments, the start of the refill operation is detected when the estimated dosing rate, given by the feedback signal, is below a dosing rate threshold.

In some embodiments, the method further comprises: determining a time sequence of differences between associated values of the estimated dosing rate as predicted by the prediction and as adjusted by the updating, and evaluating the differences for detection of the start of the refill operation.

In some embodiments, the start of the refill operation is detected when a dispersion metric of the differences exceeds a dispersion threshold.

In some embodiments, the method further comprises: obtaining said input data by downsampling at least one of the weight signal or the speed signal.

In some embodiments, the downsampling is performed to generate said input data at a time interval given as a function of the speed of the conveyor device.

In some embodiments, the conveyor device comprises a screw conveyer, and said input data is generated in synchronization with a momentary revolution rate of the screw conveyer.

In some embodiments, the state observer comprises a discrete-time state-space Kalman filter.

Still other objectives, aspects, features, and embodiments as well as technical advantages will appear from the following detailed description as well as from the drawings.

Brief Description of the Drawings

FIG. 1 is a schematic diagram of an example apparatus for production of ice cream with solid ingredients.

FIG. 2 is a flow chart an example method of operating the apparatus in FIG. 1.

FIG. 3 is a block diagram of an example arrangement for feedback control of a conveyor device in the apparatus of FIG. 1.

FIGS 4-7 are flow charts of example methods of operating a conveyor device.

FIG. 8A is a block diagram of an example sub-system for generating a feedback signal for the control system of FIG. 3, and FIG. 8B is a flow chart of a method performed by a pre-processing unit is the sub-system of FIG. 8A.

FIG. 9 shows, for two different techniques of feedback signal generation, responses (top) to step changes in the speed of a conveyor device, as well as measured speed (middle) of the conveyor device and measured weight (bottom) of a feeding system.

FIGS 10A-10B show, for two different techniques for feedback signal generation, target and feedback signals (top), as well as measured speed of a conveyor device (middle) and measured weight of a feeding system (bottom) during closed-loop operation of a control system.

FIGS 11A-11B correspond to FIGS 10A-10B and represent data generated in a different test.

FIG. 12 is an enlarged view of the graphs in FIG. 11B.

Detailed Description

Embodiments will now be described more fully hereinafter with reference to the accompanying drawings, in which some, but not all, embodiments are shown. Indeed, the subject of the present disclosure may be embodied in many different forms and should not be construed as limited to the embodiments set forth herein; rather, these embodiments are provided so that this disclosure may satisfy applicable legal requirements.

Well-known functions or constructions may not be described in detail for brevity and/or clarity. Unless otherwise defined, all terms (including technical and scientific terms) used herein have the same meaning as commonly understood by one of ordinary skill in the art to which this invention belongs.

Like reference signs refer to like elements throughout.

Before describing embodiments in more detail, a few definitions will be given.

As used herein, "solid ingredient" refers to any non-fluid ingredient that may be added in pieces to ice cream during production and that that will appear in the finished ice cream substantially as inclusions which distinguish themselves by flavor, appearance and/or consistency from the surrounding ice cream. Examples of solid ingredients include fruit, chocolate, nougat, nuts, cookies, cakes, brownies, hard candy, soft candy, etc.

As used herein, "state observer" is used in its ordinary meaning and refers to a device, module or unit that provides an estimate of the internal state of a given real system, from measurements of the input and output of the real system. The state observer is typically computer-implemented and is also known as a "state estimator". The state observer may be defined in discrete time or continuous time. Examples of state observers include Kalman filters, particle filters, extended state observers, etc.

As used herein, "Kalman filter" is used in its ordinary meaning and refers to a class of state observers. The Kalman filter may be defined in discrete time or continuous time. As used herein, the term "Kalman filter" includes the original optimal state estimator for linear systems in the presence of Gaussian measurement or process noise, as well as variants thereof such as the extended Kalman filter (EKF), the unscented Kalman filter (UKF), the square-root unscented Kalman filter (SR-UKF), the ensemble Kalman filter (EnKF), etc.

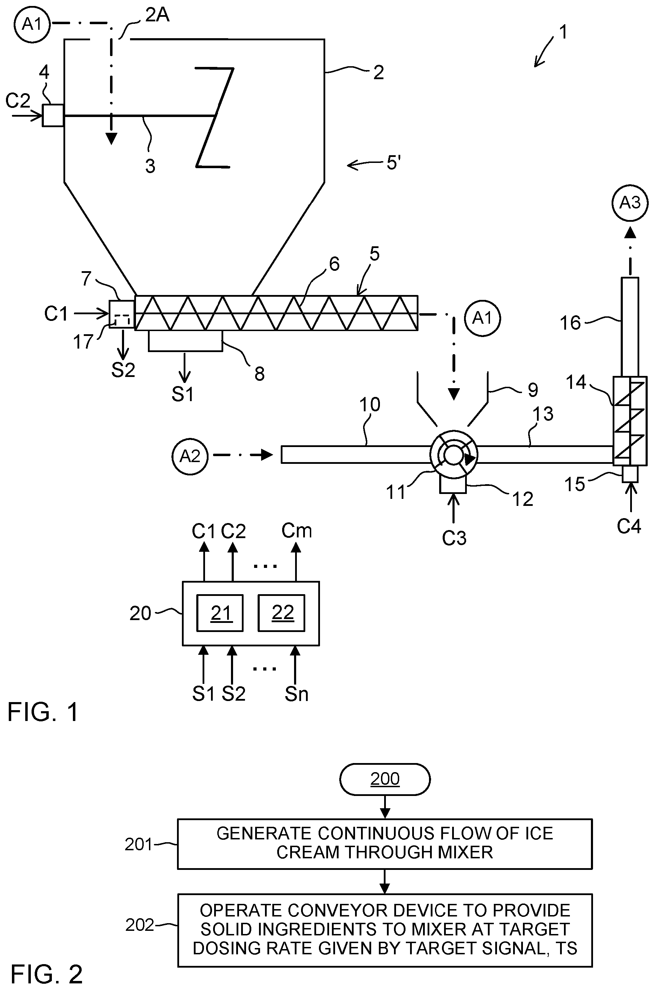

FIG. 1 is a schematic view of an example apparatus 1 for use in production of ice cream with inclusions. The apparatus 1 comprises a feeding system 5' for the solid ingredients that form the inclusions in the ice cream. The feeding system comprises a hopper 2, which defines an enclosure for receiving and holding the solid ingredients, via an infeed opening 2A. An agitator 3 is arranged inside the hopper 2 and configured agitate the solid ingredients to promote mixing within the hopper and counteract clogging. The agitator 3 is driven for rotation inside the hopper 2 by a drive unit 4, for example an electric motor. A conveyor device 5 is arranged below the hopper 2 to receive the solid ingredients and provide a well-controlled flow of solid ingredients for admixing into the ice cream. The hopper 2 rests on or is attached to the conveyor device 5. In the illustrated example, the conveyor device 5 is a screw conveyor that comprises an auger 6, which is driven for rotation by a drive unit 7, for example an electric motor. Other conveyor devices are conceivable, for example a vibratory conveyor, a belt conveyor, a drag conveyor, a bucket conveyor, etc.

A weight sensing arrangement, WSA, 8 is arranged to measure the weight of the feeding system 5' and any solid ingredients contained therein. The WSA 8 is configured to output a sensor signal ("weight signal") S1 indicative of the weight or mass measured by the WSA 8. It is realized that changes in the measured weight corresponds to changes in the weight of the solid ingredients, and thus the feed rate of solid ingredients out of the feeding system 5'. The WSA 8 may comprise one or more weight cells distributed along the conveyor device, or a single unitary weight scale. The WSA 8 is standard equipment in the field of ice cream making and well-known to the skilled person.

The apparatus 1 further comprises a funnel 9 for receiving the solid ingredients from the feeding system 5', and feed pipe 10 for receiving ice cream from an upstream freezer system (not shown). A mixer 11 is arranged to receive a flow of ice cream via the feed pipe 10 and a flow of solid ingredients via the funnel 9 and is operable to mix or blend the solid ingredients into the ice cream. In the illustrated example, the mixer 11 is a lamella pump. Alternatively, the mixer 11 may be a vane pump, a piston pump arrangement, an inline mixer, etc. The mixer 11 is driven by a drive unit 12, for example an electric motor. A transfer pipe 13 is arranged to receive the mixture of ice cream and solid ingredients from the mixer 11 and transfer the mixture to a further mixing arrangement 14, which is operable to mitigate formation of pockets of solid ingredients in the ice cream. In the illustrated example, the mixing arrangement 14 is an inline mixer with a rotary element. The rotary element is driven by a drive unit 15, for example an electric motor. In an alternative, a static inline mixer is used. An outlet pipe 16 is arranged to receive the processed mixture of ice cream and solid ingredients from the mixing arrangement 14 and transfer the processed mixture for further processing into a final product.

During operation of the apparatus 1, solid ingredients A1 are supplied in batches to the hopper 2. The supplying of solid ingredients A1 may be repeated during operation of the apparatus 1 to refill the hopper 2, either automatically or manually. The conveyor device 5 is operated to feed the solid ingredients A1 to the mixer 11. Concurrently, ice cream A2 is feed to the mixer 11 via the feed pipe 10. The processed mixture A3 of ice cream A2 and solid ingredients A1 is output from the output pipe 16 as a flow of ice cream with inclusions. The flow in the output pipe 16 may be continuous or intermittent depending on the configuration of the apparatus 1.

FIG. 1 also includes a control device 20, which is configured control the operation of the apparatus 1. The control device 20 may or may not be part of the apparatus 1. The control device 20 may be implemented by hardware or a combination of software and hardware. In the illustrated example, the control device 20 comprises processor circuitry 21, and computer memory 22. The processor circuitry 21 may, for example, include one or more of a CPU ("Central Processing Unit"), a DSP ("Digital Signal Processor"), a microprocessor, a microcontroller, an ASIC ("Application-Specific Integrated Circuit"), a combination of discrete analog and/or digital components, or some other programmable logical device, such as an FPGA ("Field Programmable Gate Array"). In one non-limiting example, the control device 20 is a PLC. A control program comprising computer instructions may be stored in the memory 22 and executed by the processor circuitry 21 to perform methods and procedures as described in herein. The control program may be supplied to the control device 20 on a computer-readable medium, which may be a tangible (non-transitory) product (e.g. magnetic medium, optical disk, read-only memory, flash memory, etc.) or a propagating signal.

The control device is configured to receive input signals, indicated as S1, S2, ..., Sn, and to generate and output control signals, indicated as C1., C2, ..., Cm, for operating the apparatus 1. In the illustrated example, the control signals comprise signal C1 for operating drive unit 7, signal C2 for operating drive unit 4, signal C3 for operating drive unit 12, and signal C4 for operating drive unit 15. In FIG. 1, the input signals comprise the weight signal S1 from the WSA 8. The input signals may also comprise a speed signal S2 from a speed sensor 17, which may be associated with the conveyor device 5 for sensing the speed of the drive unit 7. The illustrated example, the speed sensor 17 is integrated in the drive unit 7. In the examples given hereinbelow, the speed signal S2 designates the speed as percentage of a maximum speed of the conveyor device 5, but the speed may be given in any suitable unit. The speed sensor 17 may be an electromechanical encoder, a photoelectric encoder, a potentiometer, an accelerometer, etc.

Although not shown in FIG. 1, the control device 20 may also be connected to a user interface (UI) device, which may be configured to receive operator input for configuring the control device 20 and/or generate feedback to an operator. For example, the UI device may comprise one or more of a keyboard, maneuver buttons, a touch screen, a microphone, a display, indicator lamps, a speaker, a siren, etc.

In a non-limiting example, the dosing rate of the solid ingredients is in the range of 15-1,200 liters per hour, depending on the configuration of the conveyor device 5 and the solid ingredients. The density of the solid ingredients may be in the range of 200-1,400 grams per liter. It is realized that it is demanding to configure the control device 20 to accurately and reliably operate the conveyor device 5 within these wide ranges.

FIG. 2 is a flow chart of an example overall method of operating the apparatus 1. The method 200 may be performed by the control device 20 in FIG. 1. Step 201 involves generating a continuous flow of ice cream through the mixer 11 via the feed piping 10. As noted above, the flow of ice cream may be generated by an upstream freezer system (not shown). In step 202, the conveyor device 5 is operated to supply the solid ingredients to the mixer 11. In the illustrated example, step 202 involves operating the conveyor device 5 to provide the solid ingredients to the mixer 11 at a target dosing rate given by a target signal, TS. The target dosing rate is set, by the control device 20 or a separate control device, to achieve a desired amount of inclusions per unit ice cream in the final product. Thus, the target signal TS may be set in dependence of the incoming flow rate of ice cream to the mixer 11, or vice versa.

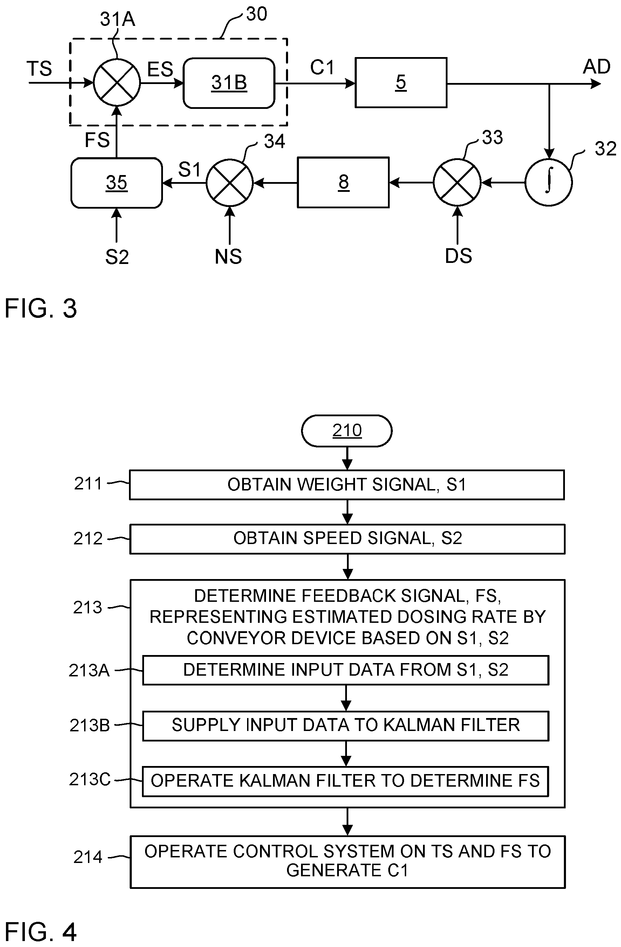

FIG. 3 is a block diagram of an example installation of a control system 30 for operation of the apparatus 1 in accordance with step 202 in FIG. 2, and in particular for operation of the conveyor device 5. The control system 30 is configured to generate the control signal C1 for setting the speed of conveyor device 5. In the example of a screw conveyor, the control signal C1 defines the rotational speed of the auger 6. As a result of the control signal C1, the conveyor device 5 will generate an actual dosing rate, AD, of solid ingredients to the mixer 11. The actual dosing rate is estimated by use of the weight signal S1 from the WSA 8. Aa noted above, the signal S1 represents the momentary weight or load measured by the WSA 8. However, the signal S1 is affected by integration effects, which are inherent to the apparatus 1 and represented by an integration unit 32. The signal S1 also includes unknown disturbances, which are represented as a disturbance signal DS, and measurement noise, which is represented as a disturbance signal NS. The incorporations of DS and NS are conceptually represented by a respective addition unit 33, 34 in FIG. 3.

The control system 30 is configured to operate on the target signal TS and a feedback signal FS to generate the control signal C1. The feedback signal FS contains an estimation of the momentary dosing rate of solid ingredients to the mixer 11. The control system 30 may implement any suitable control algorithm for generating the control signal C1, for example P, PI, PD or PID, as is well-known in the art. In the illustrated example, the control system 30 includes a subtraction unit 31A, which is configured to generate an error signal ES representing the momentary difference between TS and FS, and a controller 31B, which is configured to implement the above-mentioned control algorithm.

A processing module 35 is installed to generate the feedback signal FS based on the weight signal S1 from the WSA 8, and based on a signal S2 representing the momentary speed of the conveyor device 5. As noted above, the signal S2 may originate from a speed sensor 17 in the apparatus 1. In an alternative, the signal S2 may be given by or obtained from the control signal C1. In some embodiments, the processing module 35 obtains signal values from S1 and S2 at a regular sampling interval. In a non-limiting example, the sampling interval is in the range of 0.01-1 seconds. In a specific non-limiting example, the sampling interval is 0.1 seconds.

The control system 30 and the processing module 35 may be implemented by the control device 20, for example by software routines executed by the processor circuitry 21.

The inventive efforts presented herein are focused on the processing module 35 and aim at providing a feedback signal FS that represents the actual dosing rate AD as accurately as possible, both in time and magnitude. It is understood that the performance of the control system 30 is highly dependent on the quality of the feedback signal FS. For example, the dynamic performance of the feedback signal FS will affect the ability of the apparatus 1 to respond to changes in the production rate of ice cream. If the response time of the feedback signal FS is long, there is a risk that the final product contains an inadequate or varying amount of inclusions, and the final product may need to be discarded.

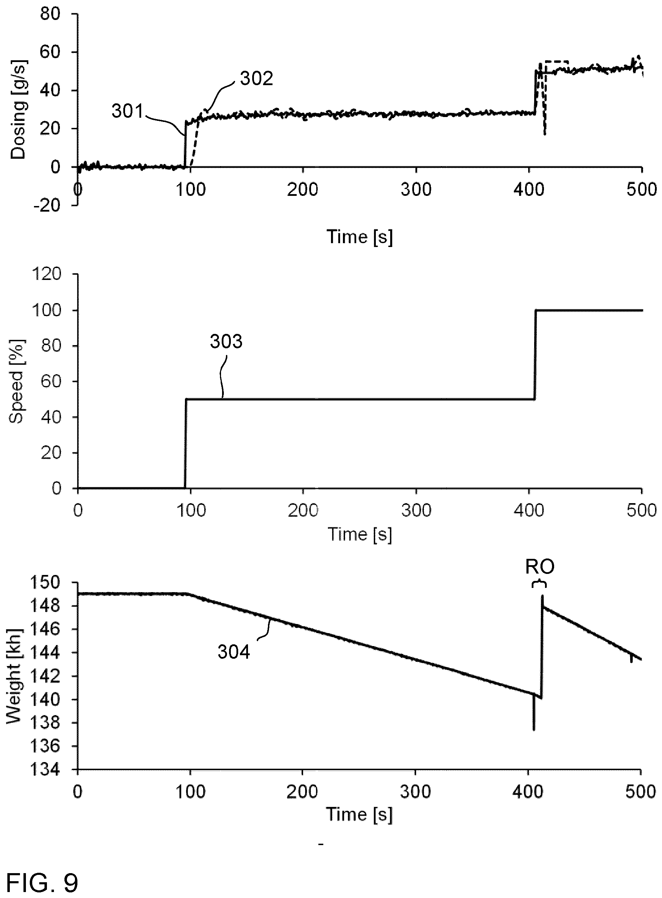

Before describing embodiments of the processing module 35 in accordance with embodiments, a reference implementation will be presented. The performance of embodiments will be compared to the reference implementation further below with reference to FIGS 9-12. In the reference implementation, the processing module 35 is configured to apply one or more low-pass filters on the weight signal S1 to reduce measurement noise (cf. NS in FIG. 3). A current value in the signal S1 is then subtracted from a previous value in the signal S1 to estimate the momentary dosing rate. This is repeatedly performed at consecutive time steps to generate a primary feedback signal, which is subjected to further low-pass filtering to generate a secondary feedback signal, which forms the feedback signal FS that is provided to the control system 30. The reference implementation suffers from a poor dynamic behavior, in that there is a significant delay before a change in AD shows up in FS. Further, the reference implementation is sensitive to disturbances that may occur during operation of the apparatus 1 (cf. DS in FIG. 3), for example when the hopper 2 is refilled with a batch of solid ingredients or when someone climbs onto the apparatus 1 or otherwise creates a mechanical impact on the feeding system 5'.

FIG. 4 is a flow chart of an example method 210 of operating the feeding system 5', and in particular the conveyor device 5, in accordance with an embodiment of step 202 in FIG. 2. The method 210 comprises steps 211-213, which are performed by the processing module 35, and a step 214, which is performed by the control system 30. In step 211, the weight signal S1 is obtained. In step 212, the speed signal S2 is obtained. In step 213, the feedback signal FS is determined based on S1 and S2 to represent an estimated dosing rate of the solid ingredients by the conveyor device 5 over time. As shown, step 213 may comprise steps 213A-213C, which are performed repeatedly at consecutive time steps. In step 213A, input data is determined from each of S1 and S2. In step 213B, the input data is supplied to a Kalman filter. The Kalman filter is configured to generate the feedback signal FS based on a system model that relates a momentary dosing rate of the solid ingredients to a momentary speed of the conveyor device 5. In step 213C, the Kalman filter is operated to determine, for a current time step, a signal value of the feedback signal FS.

In step 214, which is also repeatedly performed at consecutive time steps, the control system 30 is operated to generate the control signal C1 for setting the speed of the conveyor device 5 based on the target signal TS and the feedback FS, for example as described above with reference to FIG. 3.

By using a Kalman filter in step 213C, instead of the low-pass filtering of the reference implementation, the feedback signal FS is generated to more accurately represent the actual dosing rate AD. In other words, the responsiveness of the feedback signal FS is improved. In turn, this improves the operation of the control system 30.

In its original form, a Kalman filter (KF) is an optimal estimator of a system's states with respect to the mean squared error (MSE) of the states, $E[(x - \hat{x})^2]$. The KF estimates an unknown process by combining a system model for the unknown process and a measurements of the unknown process. The KF then recursively calculates an optimal Kalman gain to minimize the MSE of the states. The ratio between the covariance of measurement noise and the covariance of model noise determines whether the KF weights the measurements most or the model most. If the covariance of the model noise is small, the system model is deemed to be reliable, and the estimate of the state will mainly be based upon the system model. In the opposite situation, if the covariance of measurement noise is small, the estimate will mainly be based on the measurements.

To define the operation of a standard Kalman filter, a discrete-time state-space format may be used:

$$x(k + 1) = F \cdot x(k) + G \cdot u(k) + w(k) \qquad \text{(Eq. 1)}$$

$$y(k) = H \cdot x(k) + v(k) \qquad \text{(Eq. 2)}$$

where $k$ is a time index, $x(k)$ is a state vector, $u(k)$ is the input, $w(k)$ is model noise, $v(k)$ is measurement noise, $y(k)$ is the observable output, $F$ is a state transition matrix, $G$ is a control-input matrix, and $H$ is an observation matrix.

The operation of the Kalman filter may be separated into a prediction (or projection) stage and an update stage.

In the prediction stage, the Kalman filter predicts a current value based upon previous samples, and before the information in the measurements is used (*a priori*):

$$\hat{x}(k|k - 1) = F \cdot \hat{x}(k - 1|k - 1) + G \cdot u(k - 1) \qquad \text{(Eq. 3)}$$

$$\hat{y}(k|k - 1) = H \cdot \hat{x}(k|k - 1) \qquad \text{(Eq. 4)}$$

$$\hat{P}(k|k - 1) = F \cdot P(k - 1|k - 1) \cdot F^T + Q \qquad \text{(Eq. 5)}$$

where $\hat{x}(k|k$ - $1)$ is a state estimate at time $k$ given $k$ - 1 samples, $\hat{x}(k$ - $1|k$ - $1)$ is a state estimate at time $k$ - 1 given $k$ - 1 samples, $\hat{y}(k|k$ - $1)$ is an output estimate at time $k$ given $k$ - 1 samples, $\hat{P}(k|k$ - $1)$ is a covariance estimate at time $k$ given $k$ - 1 samples, $P(k$ - $1|k$ - $1)$ is a covariance estimate at time $k$ - 1 given $k$ - 1 samples, and $Q$ is the model noise covariance.

In the update stage, all of the estimates from the prediction stage are updated to determine an *a posteriori* estimate, meaning that the values now use the information in the measurements:

$$e(k) = y(k) - \hat{y}(k|k - 1) \qquad \text{(Eq. 6)}$$

$$S(k) = H \cdot \hat{P}(k|k - 1) \cdot H^T + R \qquad \text{(Eq. 7)}$$

$$Kf(k) = \hat{P}(k|k - 1) \cdot H^T \cdot S^{-1} \qquad \text{(Eq. 8)}$$

$$\hat{x}(k|k) = \hat{x}(k|k - 1) + Kf(k) \cdot e(k) \qquad \text{(Eq. 9)}$$

$$P(k|k) = (I - Kf(k) \cdot H) \cdot \hat{P}(k|k - 1) \qquad \text{(Eq. 10)}$$

**where** $e(k)$ is the innovation at time $k$, $y(k)$ is a measurement taken at time $k$, $S(k)$ is the innovation covariance at time $k$, $R$ is the measurement noise covariance, $Kf(k)$ is the Kalman gain at time $k$, $\hat{x}(k|k)$ is the updated state estimate at time $k$ given $k$ samples, and $P(k|k)$ is the updated covariance estimate at time $k$ given $k$ samples.

In order to implement the Kalman filter, a system model needs to be chosen along with values for $Q$ and $R$. Values of $Q$ and $R$ are typically chosen based on experience or by testing. In the context of generating the feedback signal FS, the system model defines the dosing rate of the conveyor device as a function of one or more variables. In the examples presented herein, the system model defines the dosing rate as a linear function of the speed of the conveyor device. This yields the system model, in state-space format:

$$\hat{x}(k + 1) = \hat{x}(k) + G \cdot \Delta u(k) \qquad\qquad \text{(Eq. 11)}$$

$$\hat{y}(k) = \hat{x}(k) \qquad\qquad \text{(Eq. 12)}$$

where $\hat{x}$(k) is the estimated dosing rate at time index $k$, $\Delta u(k)$ is the difference in speed at time index $k$, and $\hat{y}(k)$ is the estimated dosing rate at time index $k$. It may be noted that $F = 1$ since it is assumed that the previous dosing rate does not affect the current dosing rate, and that $H = 1$, since the output is the same as the state. The control-input matrix $G$ is a single coefficient, which may be specific to each solid ingredient and to each configuration of the conveyor device. Thus, $G$ may change if a mechanical adjustment is made to the conveyor device, for example a change of auger 6. Thus, in some embodiments, different values of $G$ are predefined for the apparatus 1 depending on solid ingredient and the configuration of the conveyor device 5. For example, a value of $G$ may be specified for each ice cream recipe to be implemented by the apparatus 1. For example, the operator may enter a predefined value of $G$ into the control device 20 before starting the production of ice cream. Alternatively, the control device 20 may automatically, for example based on recipe data, derive a value of $G$ from a database.

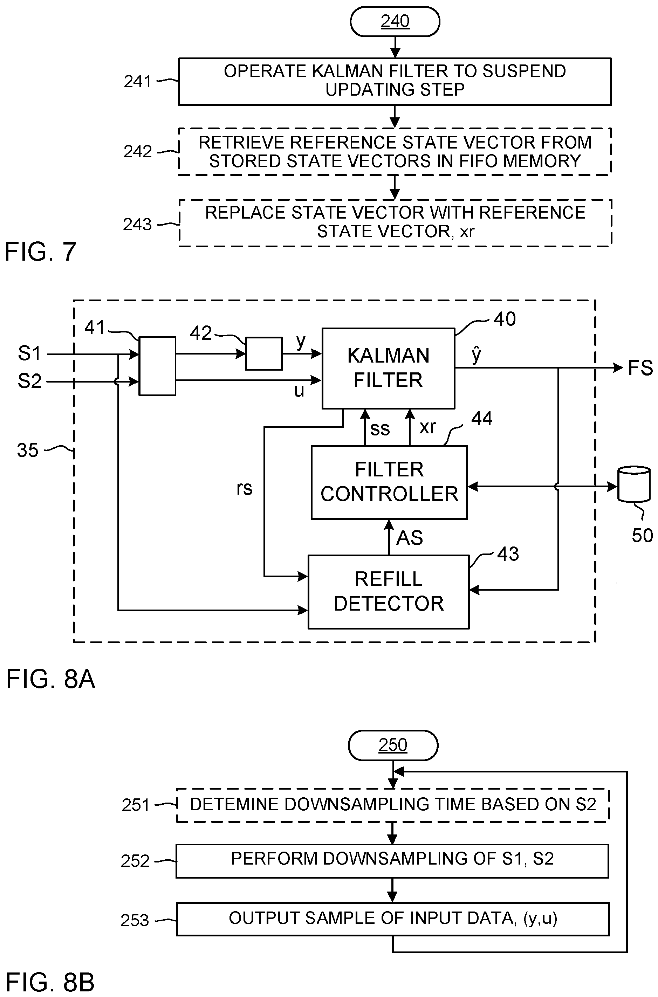

It is to be understood that $\Delta u(k)$ is determined from the speed signal S2. Further, the weight signal S1 is used to determine a measured dosing rate, $y(k)$, for use in the update stage. In some embodiments, the measured dosing rate is determined by differentiating the weight signal S1. For example, $y(k)$ may be given by $S1(k) - S1(k - 1)$, optionally normalized by the time difference between $k$ and $k - 1$, with $S1(k)$ and $S1(k - 1)$ being signal values in the weight signal S1. Here, time index $k$ is a current time step and time index $k - 1$ is a preceding time step. It may be noted that the determination of $y(k)$ may involve averaging of signal values in the weight signal S1. Such averaging may be performed by downsampling the weight signal S1 before it is processed for determination of $y(k)$. Similarly, the speed signal S2 may be downsampled before it is processed for determination of $u(k)$. Examples of downsampling are given below with reference to FIGS 8A-8B.

It is also to be understood that the system model may depend on one or more further variables, in addition to the speed of the conveyor device. Such a further variable may be included as a linear or non-linear term in the system model. It is also conceivable that the system model is defined to have a non-linear dependence on the speed of the conveyor device. However, it is currently believed that a linear system model improves the performance of the processing module 35.

For a Kalman filter defined according to Eqs. 11-12 above, the input data to the Kalman filter, as determined in step 213A in FIG. 4, is thus a speed value $u$ (momentary speed), which is obtained from the speed signal S2, and a measured dosing rate $y$ (momentary dosing rate), which is obtained from the weight signal S1.

It may also be noted that the foregoing discussion is equally applicable to any Kalman filter variant (EKF, UKF, etc.). Further, it is also applicable to other state observers. Other state observers operate in a manner similar to the Kalman filter, to determine one or more states of a system based on a system model. Thus, even if the present description is given for the original Kalman filter, it is equally applicable to Kalman filter variants as well as state observers in general.

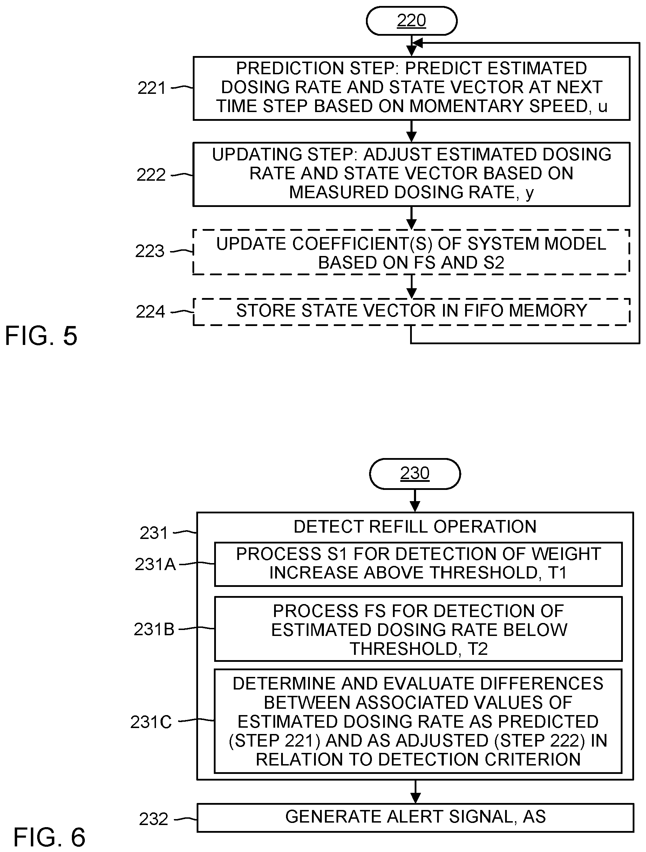

FIG. 5 is a flow chart of an example method 220 performed by a processing module 35 that includes a Kalman filter 40 (FIG. 3), for example as defined by Eqs. 11-12. The method comprises steps 221 and 222, which are performed repeatedly at consecutive time steps, for example as part of step 213C in FIG. 4. In other words, steps 221, 222 are performed continuously over time. Step 221 is a prediction step and corresponds to the above-mentioned prediction stage of the Kalman filter. In step 221, the estimated dosing rate (cf. $\hat{y}(k + 1)$) of the conveyor device and the state vector at the next time step are predicted based on the momentary speed, given by $u$ in the input data (step 213B). Generally, step 221 is performed in accordance with Eqs. 3-5. Step 222 is an updating step and corresponds to the above-mentioned update stage. In step 222, the estimated dosing rate (cf. $\hat{y}(k + 1)$) and the state vector from step 221 are adjusted based on the measured dosing rate, given by $y$ in the input data (step 213B). Generally, step 222 is performed in accordance with Eqs. 6-10. Thus-adjusted estimated dosing rate may then be output as a signal value in the feedback signal FS.

As shown in FIG. 5, the method 220 may comprise a step 223 of updating one or more coefficients of the system model based on the feedback signal FS and the speed signal S2. In the example of Eqs. 11-12, step 223 determines the coefficient $G$. Recalling that the coefficient $G$ represents the linear relation between the estimated dosing rate ($\hat{y}(k + 1)$) and the speed ($u(k)$), $G$ may be determined by calculating the ratio of a first value, which is derived from the feedback signal FS, and a second value, which is derived from the speed signal S2. The first and second values may be taken over any time interval. In some embodiments, step 223 is performed at each time step, i.e. continuously, except during a disturbance, for example a refill operation.

In a specific example of step 223, a momentary value of $G$ is calculated at each time step in relation to the previous time step, and stored in a FIFO memory. Thereby, the FIFO memory holds the M latest momentary values of $G$. At each time step, the value of $G$ used in the system model is determined based on the M momentary values in the FIFO memory, for example as an average, a median, etc.

Step 223 provides a significant technical advance in that it relaxes the need to enter predefined values of *G* for different operating states of the apparatus 1 (solid ingredient, configuration of conveyor device, etc.). It also mitigates the risk that an incorrect value of *G* is used by the processing module 25, which would reduce the accuracy of the feedback signal FS. Instead, by step 223, the processing module 25 is operable to autonomously adjust *G* to a correct value during operation. At startup, the processing module 25 may operate on a default value of *G*.

In the example of FIG. 5, the method 200 also includes a step 224 of storing the state vector in a FIFO (First In, First Out) memory. The FIFO memory may be part of the memory 22 (FIG. 1) and may be configured to hold a plurality of state vectors. The number N of state vectors in the FIFO memory may be set to correspond to a predefined time. The use of the FIFO memory will be described below with reference to FIGS 7-8.

Disturbances that affect the weight signal S1 (cf. DS in FIG. 3) may disrupt the operation of the conveyor device 5. One such disturbance occurs when the hopper 2 is refilled with a batch of solid ingredients (FIG. 1). The refill operation may be performed quite frequently during operation of the apparatus 1, so it is desirable to mitigate the impact of the refill operation on the control of the conveyor device 5. This is enabled by the example method 230 in FIG. 6, which includes a step 231 of detecting that a refill operation is started based on the weight signal S1 and/or the feedback signal FS, and a step 232 of generating an alert signal, AS, whenever a refill operation is detected by step 231. The alert signal may trigger the control device to take one or more actions to mitigate the impact of the refill operation on the feedback signal FS, for example as described below with reference to FIG. 7. The method 230 may be performed by the control device 20, for example as part of the processing device 25. FIG. 6 illustrates example sub-steps 231A-231C that may be performed as part of step 231, individually or in any combination, to detect the start of the refill operation.

In step 231A, the weight signal S1 is processed for detection of a weight increase per unit time above a weight increase threshold, T1. The rationale for step 231A is that the load on the WSA 8 is likely to increase as solid ingredients are filled into the hopper 2. The weight increase may be derived in the weight signal for a time period, which is set so a detectable weight increase is detectable within a reasonable time from the start of the refill operation. One potential shortcoming of step 231A is that it may take some time to detect a refill operation that is performed by slowly pouring the solid ingredients into the hopper 2.

In step 231B, the feedback signal FS is processed for detection of an estimated dosing rate below a dosing rate threshold, T2. The rationale for step 231B is that the Kalman filter, and thus the feedback signal FS, is responsive to changes in the weight measured by the WSA 8. Thereby, even a slow refill operation is likely to cause the estimated dosing rate to decrease, or even become negative.

In step 231C, a plurality of differences (residuals) between associated values of estimated dosing rate as predicted in step 221 and as adjusted in step 222 (cf. $\hat{y}(k + 1)$) are determined and evaluated in relation to a detection criterion. The adjustment in step 222 is governed by the measured dosing rate (cf. $y(k)$) and is thereby responsive to changes in the weight signal S1 from the WSA 8. It has been found that step 231C is highly responsive to the start of a filling operation. In some embodiments, the detection criterion in step 231C involves detecting that a dispersion metric of the differences exceeds a dispersion threshold, T3. The rationale for using a dispersion metric is that the plurality of differences is expected to follow a Gaussian distribution with a known dispersion and zero mean in the absence of disturbances, and that the refill operation has been found to significantly increase the dispersion. The dispersion threshold may thus be set based on the known dispersion. Any dispersion metric may be used, such as standard deviation, variance, coefficient of variation, sum of differences, energy, power, sum of absolute deviations from an average value, average of absolute differences from an average value, etc. In a non-limiting example, the dispersion threshold is set in a range of 2-6 (for example 4.5 times) the standard deviation of the Gaussian distribution in the absence of disturbances.

In some embodiments, two or more of sub-steps 231A-231C are performed, and the start of a refill operation is detected by logically combining the outcomes of the respective sub-step. In one example, a logic OR is used so that a refill operation is detected if at least one sub-step indicates a refill operation. The use of a logic OR between sub-step 231A and at least one of sub-steps 231B, 231C will mitigate the above-mentioned shortcoming of sub-step 231A. Alternatively or additionally, a logic AND may be used to combine two or more sub-steps so a refill operation is detected only of all of the thus-combined sub-steps indicate a refill operation.

It is conceivable to modify the method 230 to also detect disturbances thar are not caused by a refill operation.

FIG. 7 is a flow chart of an example method 240 of operating the processing module 35 to mitigate the impact of the refill operation on the operation of the apparatus 1. In step 241, the Kalman filter is operated to suspend the updating step 222 during the refill operation. Step 241 may, for example, be triggered by the alert signal AS (cf. step 232 in FIG. 6). As a result of step 241, the Kalman filter will continue to output a feedback signal FS, but the signal values are given by the estimated dosing rate as predicted by step 221 instead of as adjusted by step 222. By suspending the updating step 222, the weight signal S1 has no impact on the feedback signal FS. In other words, the operation of the Kalman filter is shielded or isolated from the weight signal S1 and thus from the impact of the refill operation.

It is also to be noted that whenever the prediction step 221 is performed, the state covariance is increased, and whenever the updating step 222 is performed, the state covariance is decreased. Thus, the state covariance will increase during step 241. This has the result that, when the updating step 222 eventually is resumed, the updating step 222 has a larger impact on the estimated dosing rate than the prediction step 221. In other words, the Kalman filter automatically gives greater weight to the measured dosing rate (given by S1) than the model prediction based on the momentary speed (given by S2). This is advantageous since the feedback signal FS will quickly adapt to the weight measurements.

It may be noted that the suspension of step 241 may not be available for all types of state controllers, since for some state controllers the prediction and updating stages are inseparable.

The Applicant has found that the feedback signal FS may be negatively affected if there is a delay in detecting the refill operation. During such a delay, the Kalman filter performs both the prediction step 221 and the updating step 222, causing the state vector to be affected by the refill operation. Step 243 may be included to mitigate the effect of this detection delay. In step 243, the state vector is replaced by a reference state vector, xr, which is preferably unaffected by the refill operation. Step 243 results in a "resetting" of the Kalman filter. The state vector may be replaced for the reference vector as soon as the refill operation is detected. In some embodiments, the reference state vector is a based on one or more previous instances of the state vector in the Kalman filter. By configuring the reference state vector to represent one or more previous instances, step 243 will result in the Kalman filter being reset to a previous operating state. This is also denoted "rollback" herein. Step 242 is an example of a technique for achieving rollback. In step 242, the reference state vector is based on the state vectors that are currently stored in a FIFO memory, by way of step 224 in FIG. 5. As understood, the FIFO memory stores a set of the most recently used state vectors. In step 242, at least one state vector is selected based on a rollback time, which is set to exceed the detection delay. Thereby, the at least one state vector is unaffected by the refill operation. It is realized that the FIFO memory needs to contain enough state vectors to accommodate the rollback time. The reference state vector may be given by a single state vector in the FIFO memory, or by a plurality of state vectors, for example as an average thereof.

The rollback time may, but need not, be defined in units of clock time. In a variant, the rollback time is given as a predefined number of data samples, where each data sample corresponds an instance of the input data that is obtained in step 213A and supplied to the Kalman filter in step 213B. With reference to the Eqs. 1-12, this corresponds to the rollback time being given as a number of steps of the time index $k$.

It is understood that the suspension by step 241 is eventually terminated. The time point of termination may be determined by analogy with step 231 and its sub-steps 231A-231C, by detecting a lack of impact of the refill operation. Alternatively, the suspension by step 241 may have a predefined duration. It is also conceivable that the suspension by step 241 has a minimum duration, which may be given in terms of time unit or number of samples, to avoid that the updating step 222 is switched on and off too fast.

It may be noted that the method 240 is equally applicable if the refill operation is predictable, for example if it is performed automatically. The method 240 is also applicable to reduce the impact of any other disturbance than a refill operation that can be detected or predicted.

FIG. 8A is a block diagram of an example processing module 35. The processing module 35 comprises a Kalman filter 40, which is arranged to receive a time sequence of input data $y$, $u$ and generate a feedback signal FS comprising a time sequence of $\hat{y}$ values. The y values are generated from the weight signal S1, and the u values are generated from the speed signal S2. In the illustrated example, a first pre-processing unit 41 is arranged to perform a downsampling of the incoming signals S1, S2 to reduce measurement noise. In a non-limiting example, the unit 41 performs the downsampling by calculating the median for the M latest data samples in the respective signal S1, S2, with M being in the range of 5-20. For example, if the sampling interval of S1, S2 is 0.1 second, and M is 10, one sample of input data $y$, $u$ will be generated per second. In a variant, only one of the signals S1, S2 is subjected to downsampling, for example signal S1. Depending on the format of signal values in the weight signal S1, a second pre-processing unit 42 may be installed to generate y values in a required format. For example, the unit 42 may be configured to differentiate the incoming signal, for example by subtracting a previous weight sample from a current weight sample, and optionally by scaling the resulting difference by the time between the current and previous weight samples.

In the illustrated example, the processing module 35 is configured to also perform the methods 230 and 240 of FIGS 6-7. A refill detector 43 is arranged to perform the method 230, based on at least one of the weight signal S1 (step 231A), the feedback signal FS (step 231B), or residuals rs from the Kalman filter (step 231C).

A filter controller 44 is arranged to receive the alert signal AS from the refill detector 43 and perform method 240 in response to the alert signal. The filter controller 44 is connected for communication with a FIFO memory 50. The filter controller 40 generates a suspension signal ss for the Kalman filter 40 as part of step 241, which causes a suspension of the updating step in the Kalman filter 40. As shown, the filter controller 40 also retrieves one or more state vectors from the FIFO memory 50, generates the reference state vector xr, and replaces the current state vector for the reference state vector xr, in accordance with steps 242-243.

FIG. 8B is a flow chart of an example method 250 of operating the first pre-processing unit 41 in FIG. 8A, optionally together with the second pre-processing unit 42. In step 252, a downsampling of the weight signal S1 and the speed signal S2, respectively, is performed. The downsampling may be performed to generate pairs of corresponding signal values from S1 and S2. In step 253, a sample of input data (y, u) is output to the Kalman filter 40. In some embodiments, step 253 involves calculating y based on the downsampled signal value from S1, for example as described above with reference to the unit 42. The time interval between consecutive samples of input data corresponds to the downsampling period used in step 252.

In some embodiments, the downsampling in step 252 is given by a fixed downsampling period, which may be given as fixed time interval or a fixed number of data samples in the respective signal S1, S2. In other embodiments, exemplified by step 251, the downsampling period is dynamically set in dependence of the speed signal S2, so that the downsampling period decreases with increasing speed. In a specific example, the downsampling period is set to correspond to one or more complete revolutions of the auger 6 in the conveyor device 5. Thereby, samples of input data are generated in synchronization with the momentary revolution rate of the auger 6. This has been found to improve the feedback signal FS by reducing the impact of vibrations originating from the rotation of the auger 6.

FIGS 9-12 are included to illustrate the utility of the technique presented in the foregoing. FIG. 9 is a comparison between a processing module 35 operating in accordance with methods 210-240 (FIG. 4-7) and the above-mentioned reference implementation. The top graph depicts the feedback signal 301 from the processing module, and the feedback signal 302 from the reference implementation, in response to a step change in the speed of the conveyor device 5 in FIG. 1. The middle graph depicts the speed 303 of the conveyor device and thus corresponds to the speed signal S1. As seen, a step change is performed at time 96 seconds. The bottom graph depicts the weight 304 measured by the WSA and thus corresponds to the weight signal S1. As seen, the response to a speed change is significantly faster in signal 301. Further, seen in signal 304, a refill operation RO is performed between times 405-414 seconds. Signal 301 is largely unaffected by the refill operation, through the use of method 240 (FIG. 7), whereas signal 302 exhibits significant instability during and after the refill operation.

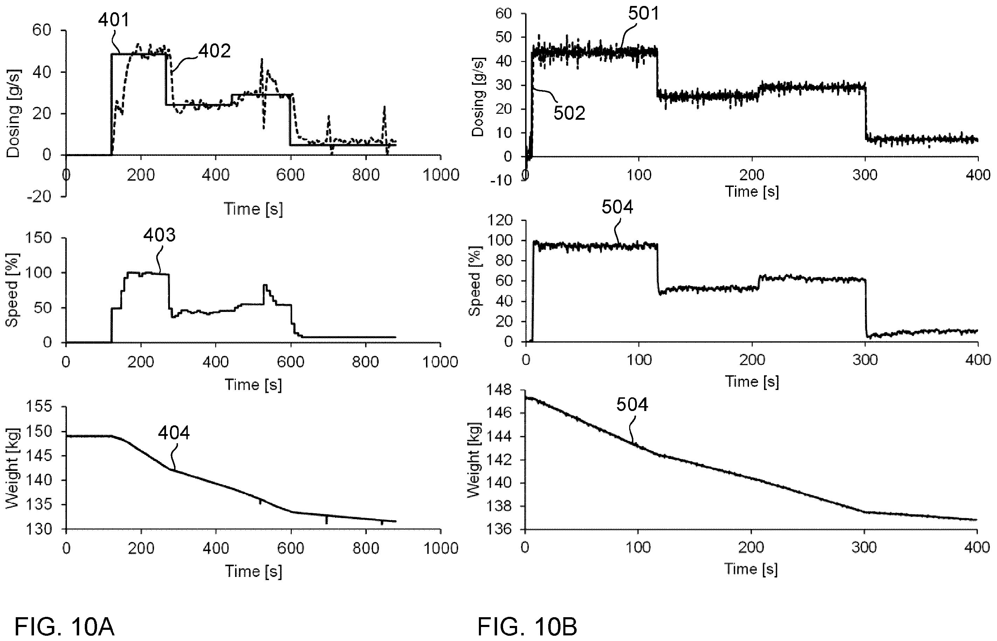

FIG. 10A shows a test result with feedback control based on the feedback signal from the reference implementation. In the top graph, signal 401 is the target signal (TS), and signal 402 is the feedback signal (FS). The middle graph shows the speed 403 of the conveyor device, given by the speed signal S2. It is understood that the speed is controlled via the control signal C1 generated by the control system 30 (FIG. 3). The bottom graph shows the measured weight 404, given by the weight signal S1. FIG. 10B shows a corresponding test result with feedback control based on the feedback signal from a processing module 35 operating in accordance with methods 210-240 (FIG. 4-7). Thus, signal 501 is the target signal (TS), signal 502 is the feedback signal (FS), signal 503 is the speed signal (S2), and 504 is the weight signal (S1). By comparing the top graphs in FIGS 10A-10B, it is seen that the use of the processing module 35 results in much more consistent and stable operation. The settling time of signal 502 in FIG. 10B is about 4 seconds, whereas the settling time of signal 402 in FIG. 10A is about 55 seconds. From FIG. 10A, it is also seen that feedback control by use of the reference implementation is highly sensitive to disturbances that occur at time 518 seconds, time 694 seconds, and time 842 seconds.

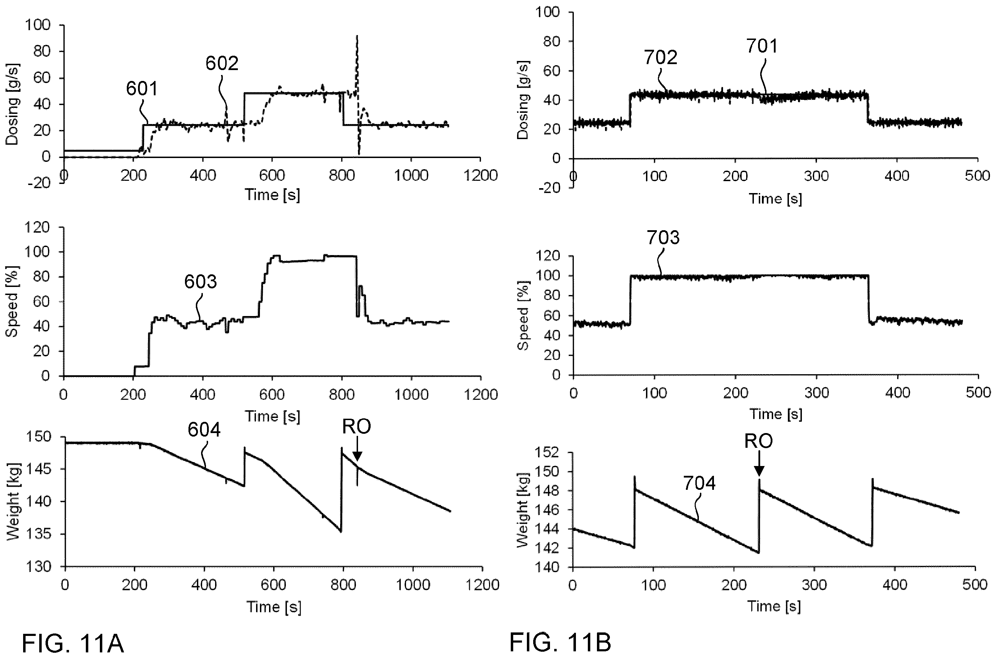

FIGS 11A-11B correspond to FIGS 10A-10B and show the result of another comparison test. Signals 601-604 in FIG. 11A correspond to signals 401-404 in FIG. 10A, and signals 701-704 in FIG. 11B correspond to signals 501-504 in FIG. 10B. The settling time of signal 702 in FIG. 11B is about 4 seconds, whereas the settling time of signal 602 in FIG. 11A is about 119 seconds. In FIG. 11A, a refill operation RO is performed at time 840 seconds, resulting is a significant disruption of the feedback signal, as seen in signal 602 in the top graph of FIG. 11A. In FIG. 11B, a refill operation RO is performed at time 231 seconds, resulting is a hardly visible change in signal 702 in the top graph of FIG. 11B.

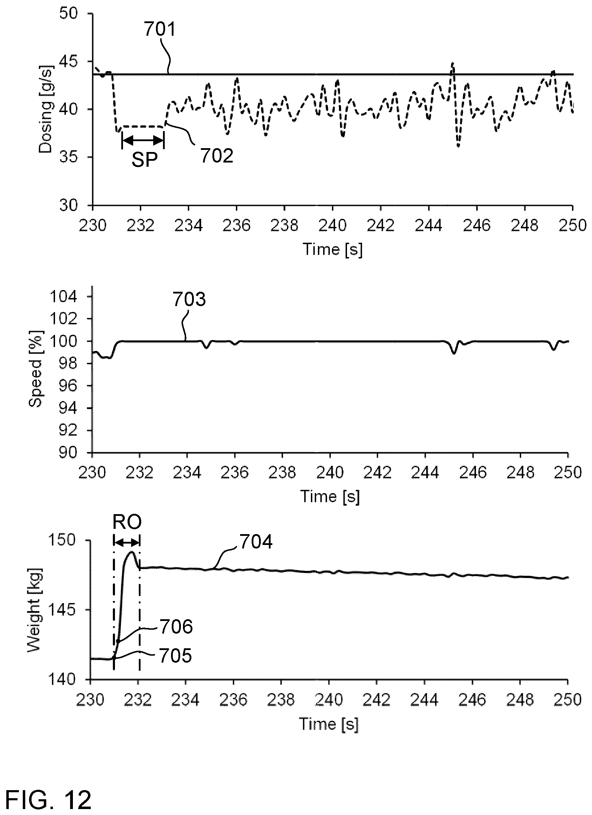

FIG. 12 is an enlarged view of FIG. 11B and shows the time span 230-250 seconds, which includes the refill operation RO. Throughout the illustrated time span, the target dosing rate (701 in the top graph) is held at 43.7 g/s. The refill operation is started at 231.0 seconds, as indicated by dot 705. The refill operation is detected by the refill detector at 231.2 seconds, as indicated by dot 706. There is thus a detection delay of 0.2 seconds. During this time period, the Kalman filter is updated by use of invalid weight data, which causes the signal values in the feedback signal (702 in the top graph) to drop from 43.7 g/s to 37.6 g/s. In the illustrated example, when the start of the refill operation is detected, the filter controller 44 (FIG. 3) is operated to suspend the updating of the Kalman filter for a suspension period SP. During the suspension period SP, the Kalman filter only performs prediction by use of the system model. After the suspension period, it takes the feedback signal (702 in the top graph) some time to again reach the target value.

In the test of FIG. 12, the processing module 35 did not include the rollback functionality of steps 242-243. Had the rollback functionality been implemented, the feedback signal (702 in the top graph) would have dropped from 43.7 g/s to 37.6 g/s and then been restored back to 43.7 g/s as soon as the start of the refill operation was detected. Thus, the impact of the refill operation on the feedback signal would have only lasted for the detection delay, which here is 0.2 seconds.

## Claims

1. A method of producing ice cream that contains one or more solid ingredients (A1), said method comprising:

   generating (201) a flow of ice cream (A2) through a mixer (11), which is configured to mix the one or more solid ingredients (A1) into the ice cream (A2), and

operating (202) a conveyor device (5) of a feeding system (5') to provide the one or more solid ingredients (A1) to the mixer (11) at a target dosing rate given by a target dosing signal (TS),

wherein said operating (202) the conveyor device comprises:

obtaining (211) a weight signal (S1) representative of a weight of the one or more solid ingredients (A1) in the feeding system (5'),

obtaining (212) a speed signal (S2) representative of a speed of the conveyor device (5),

determining (213), based on the weight signal (S1) and the speed signal (S2), a feedback signal (FS) that represents an estimated dosing rate of the one or more solid ingredients (A1) by the conveyor device (5), said determining (213) comprising: supplying (213B) input data (y, u) obtained from the weight signal (S1) and the speed signal (S2) to a state observer (40), which generates (213C) the feedback signal (FS) based on a system model that relates a momentary dosing rate (y) of the one or more solid ingredients (A1) to a momentary speed of the conveyor device (5),

determining (213A) the momentary dosing rate (y) of the one or more solid ingredients (A1) based on the weight signal (S1), and determining (213A) the momentary speed (u) of the conveyor device (5) based on the speed signal (S2), wherein the momentary dosing rate (y) and the momentary speed (u) are included in the input data that is supplied to the state observer (40),

wherein the state observer (40) repeatedly performs, at a respective current time step, a prediction (221) to predict a state vector and the estimated dosing rate at a next time step based on the momentary speed (u) of the conveyor device (5), and an updating (222) to adjust the state vector and the estimated dosing rate based on the momentary dosing rate (y), and

operating (214) a control system (30, 31) on the target dosing signal (TS) and the feedback signal (FS) to generate a control signal (C1) for setting the speed of the conveyor device (5).

2. The method of claim 1, wherein the momentary dosing rate, in the system model, is a linear function of the momentary speed of the conveyor device (5).

3. The method of claim 1 or 2, wherein at least one coefficient of the system model of the state observer (40) is updated (223) based on the feedback signal (FS) and the speed signal (S2).

4. The method of claim 1, further comprising: operating (241) the state observer (40) to suspend the updating (222) upon receipt of an alert signal that indicates a start of a refill operation of adding a batch of the one or more solid ingredients (A1) to feeding system (5').

5. The method of claim 4, further comprising: replacing (243), upon receipt of the alert signal, the state vector of the state observer (40) for a reference state vector.

6. The method of claim 5, wherein the reference state vector is a previous state vector that was used by the state observer (40) at an earlier time step, wherein the earlier time step precedes the start of the refill operation by a predefined number of data samples, wherein each data sample corresponds an instance of said input data (y, u) being obtained from the weight signal (S1) and the speed signal (S2) and supplied to the state observer (40).

7. The method of claim 4 or 5, further comprising: maintaining (224) a set of most recently used state vectors in a memory (50), and obtaining (242) the reference state vector from the set of most recently used state vectors in the memory (50).

8. The method of any one of claims 4-7, further comprising: processing (231A, 231B) at least one of the weight signal (S1) or the feedback signal (FS) for detection of the start of the refill operation, and generating (232) the alert signal upon said detection.

9. The method of claim 8, wherein the start of the refill operation is detected when an increase in the weight of the one or more solid ingredients in the feeding system (5') per unit time, given by the weight signal (S1), exceeds a weight increase threshold.

10. The method of claim 8 or 9, wherein the start of the refill operation is detected when the estimated dosing rate, given by the feedback signal (FS), is below a dosing rate threshold.

11. The method of any one of claims 4-9, further comprising: determining (231C) a time sequence of differences between associated values of the estimated dosing rate as predicted by the prediction (221) and as adjusted by the updating (222), and evaluating (231C) the differences for detection of the start of the refill operation.

12. The method of claim 11, wherein the start of the refill operation is detected when a dispersion metric of the differences exceeds a dispersion threshold.

13. The method of any preceding claim, further comprising: obtaining (250) said input data (y, u) by downsampling (252) at least one of the weight signal (S1) or the speed signal (S2).

14. The method of claim 13, wherein the downsampling is performed to generate said input data (y, u) at a time interval given as a function of the speed of the conveyor device (5).

15. The method of claim 13 or 14, wherein the conveyor device (5) comprises a screw conveyer (6), and wherein said input data (y, u) is generated in synchronization with a momentary revolution rate of the screw conveyor (6).

16. The method of any preceding claim, wherein the state observer (40) comprises a discrete-time state-space Kalman filter.

**Patentansprüche**

1. Verfahren zur Herstellung von Speiseeis, das einen oder mehrere feste Bestandteile (A1) enthält, wobei das Verfahren Folgendes umfasst:

   Erzeugen (201) eines Speiseeisstroms (A2) durch einen Mischer (11), der dazu ausgelegt ist, den einen oder die mehreren festen Bestandteile (A1) in das Speiseeis (A2) einzumischen, und
   Betreiben (202) einer Fördervorrichtung (5) eines Zuführsystems (5'), um den einen oder die mehreren festen Bestandteile (A1) dem Mischer (11) mit einer durch ein Solldosiersignal (TS) angegebenen Solldosierrate zuzuführen,
   wobei das Betreiben (202) der Fördervorrichtung umfasst:

   Erhalten (211) eines Gewichtssignals (S1), das ein Gewicht des einen oder der mehreren festen Bestandteile (A1) in dem Zuführsystem (5') repräsentiert,
   Erhalten (212) eines Geschwindigkeitssignals (S2), das eine Geschwindigkeit der Fördervorrichtung (5) repräsentiert,
   Bestimmen (213), basierend auf dem Gewichtssignal (S1) und dem Geschwindigkeitssignal (S2), eines Rückmeldesignals (FS), das eine geschätzte Dosierrate des einen oder der mehreren festen Bestandteile (A1) durch die Fördervorrichtung (5) repräsentiert, wobei das Bestimmen (213) umfasst: Zuführen (213B) von aus dem Gewichtssignal (S1) und dem Geschwindigkeitssignal (S2) erhaltenen Eingangsdaten (y, u) zu einem Zustandsbeobachter (40), der das Rückmeldesignal (FS) basierend auf einem Systemmodell erzeugt (213C), das eine momentane Dosierrate (y) des einen oder der mehreren festen Bestandteile (A1) mit einer momentanen Geschwindigkeit der Fördervorrichtung (5) in Beziehung setzt,
   Bestimmen (213A) der momentanen Dosierrate (y) des einen oder der mehreren festen Bestandteile (A1) basierend auf dem Gewichtssignal (S1), und Bestimmen (213A) der momentanen Geschwindigkeit (u) der Fördervorrichtung (5) basierend auf dem Geschwindigkeitssignal (S2), wobei die momentane Dosierrate (y) und die momentane Geschwindigkeit (u) in den Eingangsdaten enthalten sind, die dem Zustandsbeobachter (40) zugeführt werden,
   wobei der Zustandsbeobachter (40) zu einem jeweiligen aktuellen Zeitschritt wiederholt eine Vorhersage (221) durchführt, um basierend auf der momentanen Geschwindigkeit (u) der Fördervorrichtung (5) einen Zustandsvektor und die geschätzte Dosierrate zu einem nächsten Zeitschritt vorherzusagen, und eine Aktualisierung (222), um den Zustandsvektor und die geschätzte Dosierrate basierend auf der momentanen Dosierrate (y) anzupassen, und
   Betreiben (214) eines Steuersystems (30, 31) anhand des Solldosiersignals (TS) und des Rückmeldesignals (FS), um ein Steuersignal (C1) zum Einstellen der Geschwindigkeit der Fördervorrichtung (5) zu erzeugen.

2. Verfahren nach Anspruch 1, wobei die momentane Dosierrate in dem Systemmodell eine lineare Funktion der momentanen Geschwindigkeit der Fördervorrichtung (5) ist.

3. Verfahren nach Anspruch 1 oder 2, wobei mindestens ein Koeffizient des Systemmodells des Zustandsbeobachters (40) basierend auf dem Rückmeldesignal (FS) und dem Geschwindigkeitssignal (S2) aktualisiert (223) wird.

4. Verfahren nach Anspruch 1, ferner umfassend: Betreiben (241) des Zustandsbeobachters (40), um die Aktualisierung (222) bei Erhalt eines Warnsignals auszusetzen, das einen Beginn eines Nachfüllvorgangs anzeigt, bei dem eine Charge des einen oder der mehreren festen Bestandteile (A1) dem Zuführsystem (5') hinzugefügt wird.

5. Verfahren nach Anspruch 4, ferner umfassend: Ersetzen (243) des Zustandsvektors des Zustandsbeobachters (40) durch einen Referenzzustandsvektor bei Erhalt des Warnsignals.

6. Verfahren nach Anspruch 5, wobei der Referenzzustandsvektor ein vorheriger Zustandsvektor ist, der durch den Zustandsbeobachter (40) zu einem früheren Zeitschritt verwendet wurde, wobei der frühere Zeitschritt dem Beginn des Nachfüllvorgangs um eine vordefinierte Anzahl von Datenabtastwerten vorausgeht, wobei jeder Datenabtastwert einer Instanz der Eingangsdaten (y, u) entspricht, die aus dem Gewichtssignal (S1) und dem Geschwindigkeitssignal (S2) erhalten und dem Zustandsbeobachter (40) zugeführt werden.

7. Verfahren nach Anspruch 4 oder 5, ferner umfassend: Speichern (224) eines Satzes der zuletzt verwendeten Zustandsvektoren in einem Speicher (50), und Erhalten (242) des Referenzzustandsvektors aus dem Satz der zuletzt verwendeten Zustandsvektoren in dem Speicher (50).

8. Verfahren nach einem der Ansprüche 4-7, ferner umfassend: Verarbeiten (231A, 231B) mindestens eines des Gewichtssignals (S1) oder des Rückmeldesignals (FS) zur Erkennung des Beginns des Nachfüllvorgangs, und Erzeugen (232) des Warnsignals bei der Erkennung.

9. Verfahren nach Anspruch 8, wobei der Beginn des Nachfüllvorgangs erkannt wird, wenn eine durch das Gewichtssignal (S1) angegebene Zunahme des Gewichts des einen oder der mehreren festen Bestandteile in dem Zuführsystem (5') pro Zeiteinheit einen Gewichtszunahmeschwellenwert überschreitet.

10. Verfahren nach Anspruch 8 oder 9, wobei der Beginn des Nachfüllvorgangs erkannt wird, wenn die durch das Rückmeldesignal (FS) angegebene geschätzte Dosierrate einen Dosierratenschwellenwert unterschreitet.

11. Verfahren nach einem der Ansprüche 4 bis 9, ferner umfassend: Bestimmen (231C) einer zeitlichen Folge von Differenzen zwischen zugeordneten Werten der geschätzten Dosierrate, wie sie durch die Vorhersage (221) vorhergesagt und durch die Aktualisierung (222) angepasst werden, und Auswerten (231C) der Differenzen zur Erkennung des Beginns des Nachfüllvorgangs.

12. Verfahren nach Anspruch 11, wobei der Beginn des Nachfüllvorgangs erkannt wird, wenn ein Dispersionsmaß der Differenzen einen Dispersionsschwellenwert überschreitet.

13. Verfahren nach einem der vorhergehenden Ansprüche, ferner umfassend: Erhalten (250) der Eingangsdaten (y, u) durch Herunterabtasten (252) mindestens eines des Gewichtssignals (S1) oder des Geschwindigkeitssignals (S2) .

14. Verfahren nach Anspruch 13, wobei das Herunterabtasten durchgeführt wird, um die Eingangsdaten (y, u) in einem als Funktion der Geschwindigkeit der Fördervorrichtung (5) gegebenen Zeitintervall zu erzeugen.

15. Verfahren nach Anspruch 13 oder 14, wobei die Fördervorrichtung (5) eine Schneckenfördervorrichtung (6) umfasst, und wobei die Eingangsdaten (y, u) synchronisiert mit einer momentanen Umdrehungsrate der Schneckenfördervorrichtung (6) erzeugt werden.

16. Verfahren nach einem der vorhergehenden Ansprüche, wobei der Zustandsbeobachter (40) einen Kalman-Filter im diskreten Zustandsraum umfasst.

## Revendications

1. Procédé de production de crème glacée qui contient un ou plusieurs ingrédients solides (A1), ledit procédé comprenant :

la génération (201) d'un flux de crème glacée (A2) à travers un mélangeur (11), qui est configuré pour mélanger le ou les ingrédients solides (A1) dans la crème glacée (A2), et

l'actionnement (202) d'un dispositif de transport (5) d'un système d'alimentation (5') pour fournir le ou les ingrédients solides (A1) au mélangeur (11) à un débit de dosage cible donné par un signal de dosage cible (TS), dans lequel ledit actionnement (202) du dispositif de transport comprend :

l'obtention (211) d'un signal de poids (S1) représentant un poids du ou des ingrédients solides (A1) dans le système d'alimentation (5'),

l'obtention (212) d'un signal de vitesse (S2) représentant une vitesse du dispositif de transport (5), la détermination (213), sur la base du signal de poids (S1) et du signal de vitesse (S2), d'un signal de rétroaction (FS) qui représente un débit de dosage estimé du ou des ingrédients solides (A1) par le dispositif de transport (5), ladite détermination (213) comprenant : la fourniture (213B) de données d'entrée (y, u) obtenues à partir du signal de poids (S1) et du signal de vitesse (S2) à un observateur d'état (40), qui génère (213C) le signal de rétroaction (FS) sur la base d'un modèle de système qui relie un débit de dosage momentané (y) du ou des ingrédients solides (A1) à une vitesse momentanée du dispositif de transport (5),

la détermination (213A) du débit de dosage momentané (y) du ou des ingrédients solides (A1) sur la base du signal de poids (S1), et la détermination (213A) de la vitesse momentanée (u) du dispositif de transport (5) sur la base du signal de vitesse (S2), le débit de dosage momentané (y) et la vitesse momentanée (u) étant inclus dans les données d'entrée qui sont fournies à l'observateur d'état (40),

dans lequel l'observateur d'état (40) exécute de manière répétée, à une étape temporelle courante respective, une prédiction (221) pour prédire un vecteur d'état et le débit de dosage estimé à une étape temporelle suivante sur la base de la vitesse momentanée (u) du dispositif de transport (5), et une mise à jour (222) pour ajuster le vecteur d'état et le débit de dosage estimé sur la base du débit de dosage momentané (y), et

l'actionnement (214) d'un système de commande (30, 31) sur le signal de dosage cible (TS) et le signal de rétroaction (FS) pour générer un signal de commande (C1) afin de régler la vitesse du dispositif de transport (5).

2. Procédé selon la revendication 1, dans lequel le débit de dosage momentané, dans le modèle de système, est une fonction linéaire de la vitesse momentanée du dispositif de transport (5).

3. Procédé selon la revendication 1 ou 2, dans lequel au moins un coefficient du modèle de système de l'observateur d'état (40) est mis à jour (223) sur la base du signal de rétroaction (FS) et du signal de vitesse (S2) .

4. Procédé selon la revendication 1, comprenant en outre : l'actionnement (241) de l'observateur d'état (40) pour suspendre la mise à jour (222) lors de la réception d'un signal d'alerte qui indique un début d'une opération de remplissage consistant à ajouter un lot du ou des ingrédients solides (A1) au système d'alimentation (5').

5. Procédé selon la revendication 4, comprenant en outre : le remplacement (243), lors de la réception du signal d'alerte, du vecteur d'état de l'observateur d'état (40) par un vecteur d'état de référence.

6. Procédé selon la revendication 5, dans lequel le vecteur d'état de référence est un vecteur d'état précédent qui a été utilisé par l'observateur d'état (40) à une étape temporelle antérieure, dans lequel l'étape temporelle antérieure précède le début de l'opération de remplissage d'un nombre prédéfini d'échantillons de données, dans lequel chaque échantillon de données correspond à une instance desdites données d'entrée (y, u) obtenues à partir du signal de poids (S1) et du signal de vitesse (S2) et fournies à l'observateur d'état (40).

7. Procédé selon la revendication 4 ou 5, comprenant en outre : le maintien (224) d'un ensemble de vecteurs d'état les plus récemment utilisés dans une mémoire (50), et l'obtention (242) du vecteur d'état de référence à partir de l'ensemble de vecteurs d'état les plus récemment utilisés dans la mémoire (50).

8. Procédé selon l'une quelconque des revendications 4 à 7, comprenant en outre : le traitement (231A, 231B) d'au moins l'un du signal de poids (S1) ou du signal de rétroaction (FS) pour la détection du début de l'opération de remplissage, et la génération (232) du signal d'alerte lors de ladite détection.

9. Procédé selon la revendication 8, dans lequel le début de l'opération de remplissage est détecté lorsqu'une augmentation du poids du ou des ingrédients solides dans le système d'alimentation (5') par unité de temps, donnée par le signal de poids (S1), dépasse un seuil d'augmentation de poids.

EP 4 571 449 B1

**10.** Procédé selon la revendication 8 ou 9, dans lequel le début de l'opération de remplissage est détecté lorsque le débit de dosage estimé, donné par le signal de rétroaction (FS), est inférieur à un seuil de débit de dosage.

**11.** Procédé selon l'une quelconque des revendications 4 à 9, comprenant en outre : la détermination (231C) d'une séquence temporelle de différences entre des valeurs associées du débit de dosage estimé tel que prédit par la prédiction (221) et tel qu'ajusté par la mise à jour (222), et l'évaluation (231C) des différences pour la détection du début de l'opération de remplissage.

**12.** Procédé selon la revendication 11, dans lequel le début de l'opération de remplissage est détecté lorsqu'une mesure de dispersion des différences dépasse un seuil de dispersion.

**13.** Procédé selon l'une quelconque des revendications précédentes, comprenant en outre : l'obtention (250) desdites données d'entrée (y, u) par sous-échantillonnage (252) d'au moins l'un du signal de poids (S1) ou du signal de vitesse (S2).

**14.** Procédé selon la revendication 13, dans lequel le sous-échantillonnage est effectué pour générer lesdites données d'entrée (y, u) à un intervalle de temps donné en fonction de la vitesse du dispositif de transport (5).

**15.** Procédé selon la revendication 13 ou 14, dans lequel le dispositif de transport (5) comprend un transporteur à vis (6), et dans lequel lesdites données d'entrée (y, u) sont générées en synchronisation avec une vitesse de rotation momentanée du transporteur à vis (6).

**16.** Procédé selon l'une quelconque des revendications précédentes, dans lequel l'observateur d'état (40) comprend un filtre de Kalman d'espace d'état en temps discret.

FIG. 1

GENERATE CONTINUOUS FLOW OF ICE CREAM THROUGH MIXER

OPERATE CONVEYOR DEVICE TO PROVIDE SOLID INGREDIENTS TO MIXER AT TARGET DOSING RATE GIVEN BY TARGET SIGNAL, TS

FIG. 2

FIG. 3

FIG. 4

**220**

221 — PREDICTION STEP: PREDICT ESTIMATED DOSING RATE AND STATE VECTOR AT NEXT TIME STEP BASED ON MOMENTARY SPEED, u

222 — UPDATING STEP: ADJUST ESTIMATED DOSING RATE AND STATE VECTOR BASED ON MEASURED DOSING RATE, y

223 — UPDATE COEFFICIENT(S) OF SYSTEM MODEL BASED ON FS AND S2

224 — STORE STATE VECTOR IN FIFO MEMORY

**FIG. 5**

**230**

231 — DETECT REFILL OPERATION

231A — PROCESS S1 FOR DETECTION OF WEIGHT INCREASE ABOVE THRESHOLD, T1

231B — PROCESS FS FOR DETECTION OF ESTIMATED DOSING RATE BELOW THRESHOLD, T2

231C — DETERMINE AND EVALUATE DIFFERENCES BETWEEN ASSOCIATED VALUES OF ESTIMATED DOSING RATE AS PREDICTED (STEP 221) AND AS ADJUSTED (STEP 222) IN RELATION TO DETECTION CRITERION

232 — GENERATE ALERT SIGNAL, AS

**FIG. 6**

240

| 241 | OPERATE KALMAN FILTER TO SUSPEND UPDATING STEP |

| 242 | RETRIEVE REFERENCE STATE VECTOR FROM STORED STATE VECTORS IN FIFO MEMORY |

| 243 | REPLACE STATE VECTOR WITH REFERENCE STATE VECTOR, xr |

FIG. 7

FIG. 8A

250

| 251 | DETEMINE DOWNSAMPLING TIME BASED ON S2 |

| 252 | PERFORM DOWNSAMPLING OF S1, S2 |

| 253 | OUTPUT SAMPLE OF INPUT DATA, (y,u) |

FIG. 8B

FIG. 9

FIG. 10B

FIG. 10A

22

FIG. 11A

FIG. 11B

EP 4 571 449 B1

FIG. 12

**EP 4 571 449 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016068347 A1
- US 2020187523 A1
- US 2010206220 A1